# EUROPÄISCHE PATENTSCHRIFT

(11) **EP 2 345 565 B1**
(45) Veröffentlichungstag und Bekanntmachung des Hinweises auf die Patenterteilung: **11.01.2012**
(21) Anmeldenummer: 11000212.8
(22) Anmeldetag: 13.01.2011
(51) Int. Cl.: B60T 7/10

(54) **Betätigungsvorrichtung für eine Feststellbremse**
Activation device for a parking brake
Dispositif d'actionnement pour un frein de stationnement

(30) Priorität: 19.01.2010 DE 202010001072 U
(43) Veröffentlichungstag der Anmeldung: 20.07.2011
(73) Patentinhaber: Power-Cast Light Metal Solutions GmbH & Co. KG, 73278 Schlierbach (DE)
(72) Erfinder: Barcin, Baris, 70771 Leinfelden-Echterdingen (DE)
(74) Vertreter: Ruckh, Rainer Gerhard

(56) Entgegenhaltungen:
- DE-A1- 19 847 523
- DE-A1- 19 847 524
- DE-A1-102006 010 853
- GB-A- 1 118 431

## Beschreibung

Die Erfindung betrifft eine Betätigungsvorrichtung für eine Feststellbremse.

Betätigungsvorrichtungen für Feststellbremsen werden insbesondere in Kraftfahrzeugen eingesetzt. Eine derartige Betätigungsvorrichtung ist beispielsweise aus der DE 10 2006 010 853 bekannt.

Die dort beschriebene Betätigungsvorrichtung umfasst einen Handbremshebel, der an einem Lagerbock schwenkbar gelagert ist. In dem Handbremshebel ist eine Betätigungsstange geführt, die mittels eines Druckknopfs betätigt werden kann und welche an eine Festsetzeinrichtung gekoppelt ist. Die Festsetzeinrichtung weist eine Sperrklinke und ein Sperrsegment auf. Das Sperrsegment ist am Lagerbock befestigt und weist eine Leiste mit Rastzähnen auf. Die Sperrklinke weist an ihrem unteren Ende eine Rastnase auf, die an den Rastzähnen des Sperrsegments eingerastet werden kann. Das obere Ende der Sperrklinke ist mit der Betätigungsstange gekoppelt.

Die Festsetzeinrichtung dient dazu, den Handbremshebel in einer bestimmten Schwenkstellung zu fixieren. Durch Betätigen des Druckknopfs kann die Festsetzeinrichtung gelöst werden und der Handbremshebel kann in eine andere Schwenkstellung eingebracht werden, in der er wiederum durch die Festsetzeinrichtung fixierbar ist.

Der Erfindung liegt die Aufgabe zugrunde, eine kostengünstig herstellbare und montagefreundliche Betätigungsvorrichtung für eine Feststellbremse bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Betätigungsvorrichtung für eine Feststellbremse umfasst einen an einem Lagerbock schwenkbar gelagerten Handbremshebel. Der Handbremshebel mittels einer Festsetzeinrichtung in einer vorgegebenen Schwenkstellung fixierbar und umfasst eine im Handbremshebel geführte und in Wirkverbindung mit der Festsetzeinrichtung stehende Betätigungsstange. Die Betätigungsstange ist im Handbremshebel verschiebbar gelagert. An deren einem längsseitigen Ende ist ein Druckknopf mittels Befestigungsmitteln befestigt, so dass mit dem Druckknopf die Betätigungsstange betätigbar ist. Die Befestigungsmittel bilden Rastmittel und eine Drehlagerung, so dass der Druckknopf auf die Betätigungsstange aufrastbar und die Rastverbindung durch Drehen des Druckknopfs bezüglich der Betätigungsstange lösbar ist.

Durch die erfindungsgemäße Ausbildung der Befestigungsmittel zur Fixierung des Druckknopfs an die Betätigungsvorrichtung wird die Montagefreundlichkeit der Betätigungsvorrichtung signifikant erhöht. Zur Montage des Druckknopfs an der Betätigungsvorrichtung wird der Druckknopf auf die Betätigungsstange aufgerastet. Diese Verbindung kann schnell und ohne Einsatz von Werkzeugen hergestellt werden.

Ein wesentlicher Vorteil der erfindungsgemäßen Befestigungsmittel besteht darin, dass diese eine Kombination von Rastmitteln und eine Drehlagerung bilden, so dass bei freiliegender Betätigungsstange der Druckknopf durch einfaches Drehen aus der Rastverbindung wieder gelöst werden kann. Der Druckknopf kann somit ohne Einsatz von Werkzeugen schnell wieder von der Betätigungsstange gelöst werden, wodurch ein einfacher Austausch des Druckknopfs an der Betätigungsstange ermöglicht wird, ohne dass die Gefahr einer Beschädigung des Druckknopfs oder der Betätigungsstange besteht. Besonders vorteilhaft ist die Betätigungsstange in einer Führung des Handbremshebels geführt, auf welche ein Handgriff aufsetzbar ist. Bei auf der Führung aufgesetztem Handgriff ist die Drehung des Druckknopfs relativ zur Betätigungsstange blockiert.

Ein derartiger Handgriff bildet eine Außenverkleidung der Führung des Handbremshebels, der nach erfolgter Herstellung der Rastverbindung zwischen Druckknopf und Betätigungsstange über das vordere freie Ende der Betätigungsstange, wo der Druckknopf angebracht ist, aufgedreht wird und dann zweckmäßig an einem Teil des Handbremshebels beziehungsweise dessen Außenverkleidung verrastet wird.

Erfindungsgemäß wird dieser Handgriff als drehsichere Lagerung für den Druckknopf an der Betätigungsstange ausgenutzt. Damit verfüllt der Handgriff als Drehsicherung für den Druckknopf eine Zusatzfunktion, so dass zur Realisierung der Drehsicherung des Druckknopfs keine zusätzlichen Teile benötigt werden.

Besonders vorteilhaft ist der Druckknopf gegen eine Drehung relativ zur Betätigungsstange dadurch gesichert, dass ein nicht rotationssymmetrisches Segment der Mantelfläche des Druckknopfs von dem Handgriff umschlossen ist.

Dabei ist der Handgriff von einer Bohrung in axialer Richtung durchsetzt, wobei bei auf dem Handbremshebel aufsitzendem Handgriff ein Segment der die Bohrung begrenzenden Innenwand des Handgriffs an der Mantelfläche des Druckknopfs anliegt.

Damit wird allein durch die Außenkontur des Druckknopfs und die daran angepasste Innenkontur der Bohrung des Handgriffs eine Drehsicherung des Druckknopfs erzielt, was den konstruktiven Aufbau der Betätigungsvorrichtung weiter vereinfacht.

In einer besonders vorteilhaften Ausführungsform der Erfindung ist an dem längsseitigen Ende der Betätigungsstange ein von dessen Grundkörper durch eine Aussparung abgesetzter Steg vorgesehen, der in Längsrichtung der Betätigungsstange verläuft, dessen erstes längsseitiges Ende mit dem Grundkörper verbunden ist und an dessen zweitem, freiliegenden Ende eine Rastlasche vorgesehen ist, welche zur Herstellung einer Rastverbindung zwischen Druckknopf und Betätigungsstange in einen Schlitz des Druckknopfs einrastbar ist.

Der Steg mit der Rastlasche lässt sich als einstückig mit der Betätigungsstange ausgebildetes Befestigungsmittel einfach und kostengünstig fertigen, insbesondere in Form eines Kunststoff-Spritzgussteils. Das komplementäre Befestigungsmittel im Druckknopf in Form eines Schlitzes lässt sich ebenfalls einfach fertigen, wobei besonders vorteilhaft auch der Druckknopf aus einem Kunststoff-Spritzgussteil besteht.

Der durch die Aussparung vom Grundkörper der Betätigungsstange abgesetzte Steg weist eine so geringe Dicke auf, dass dieser leicht federnde Eigenschaften aufweist. Damit biegt sich der Steg beim Aufschieben des Druckknopfs leicht in den Bereich der Aussparung hinein bis die Rastlasche in den Schlitz des Druckknopfs einrastet, wodurch die Rastverbindung zwischen Druckknopf und Betätigungsstange hergestellt ist. Diese Rastverbindung ist dann durch den aufgesetzten Handgriff gesichert.

Bei abgenommenem Handgriff kann dann diese Rastverbindung durch einfaches Drehen des Druckknopfs relativ zur Betätigungsstange wieder gelöst werden.

Dies wird durch die spezifische Außenkontur der Rastlasche erzielt, welche bogenförmig ausgebildet ist.

Dabei weist vorteilhaft die Außenkontur der Rastlasche zwei unterschiedliche Krümmungsradien auf, wobei die Rastlasche in den an den Steg angrenzenden Randbereichen eine andere Krümmung aufweist als in dessen Zentrum.

Diese Außenkontur gewährleistet einerseits einen sicheren Halt der Rastlasche in dem Schlitz zur Ausbildung der Rastverbindung. Andererseits ermöglicht diese Außenkontur bei Drehen des Druckknopfs gegenüber der Betätigungsstange ein Herausgleiten der Rastlasche aus dem Schlitz, so dass dann der Druckknopf von der Betätigungsstange gelöst werden kann.

Die Erfindung wird im Folgenden anhand der Zeichnungen erläutert:
- Figur 1:: Ausführungsbeispiel einer Betätigungsvorrichtung für eine Fest- stellbremse.
- Figur 2:: Perspektivische Darstellung des vorderen Endes einer Betäti- gungsstange mit darauf aufgerastetem Druckknopf für die Betä- tigungsvorrichtung gemäß Figur 1.
- Figur 3:: Längsschnitt durch die Anordnung gemäß Figur 2.
- Figur 4:: Querschnitt durch die Anordnung gemäß den Figuren 2 und 3.
- Figur 5:: Teildarstellung der Anordnung von Figur 4.

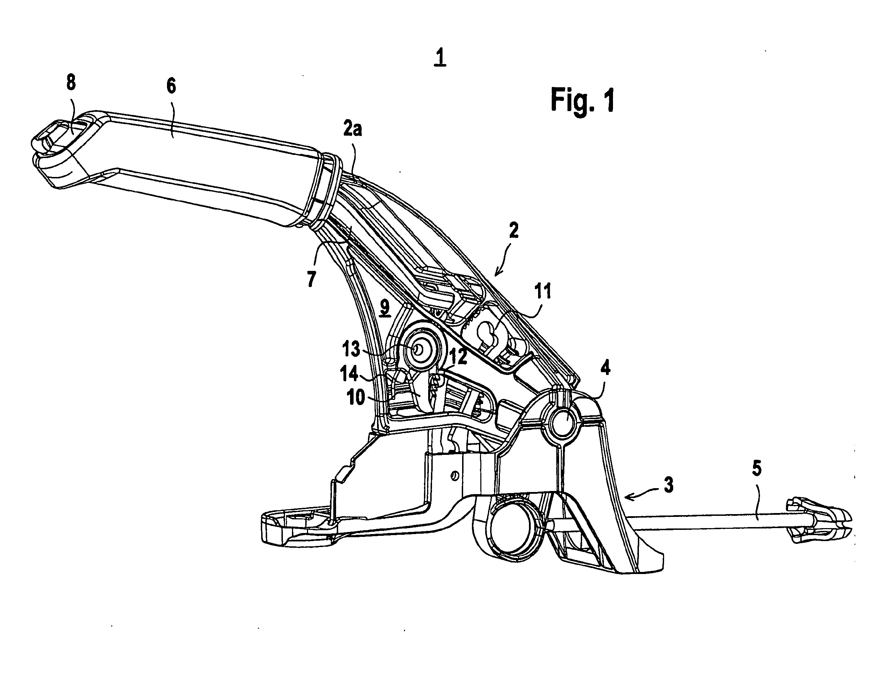

Die Figur 1 zeigt ein Ausführungsbeispiel der erfindungsgemäßen Betätigungsvorrichtung 1 für eine Feststellbremse in einem Fahrzeug. Das Fahrzeug ist insbesondere von einem Kraftfahrzeug gebildet.

Die Betätigungsvorrichtung 1 weist einen Handbremshebel 2 auf, welcher schwenkbar an einem Lagerbock 3 gelagert ist. Der Lagerbock 3 besteht aus wenigstens einem Gussteil, wobei das Gussteil vorzugsweise aus einer Leichtmetall-Legierung besteht.

Der Handbremshebel 2 ist einstückig ausgebildet und besteht ebenfalls aus einem Gussteil. Das Gussteil besteht auch in diesem Fall aus einer Leichtmetall-Legierung. Vorzugsweise werden sowohl für den Lagerbock 3 als auch für den Handbremshebel 2 Aluminium- oder Magnesium-Legierungen verwendet. Der Handbremshebel 2 ist um eine horizontal verlaufende Schwenkachse gelagert. Dabei ist der Handbremshebel 2 an einer Drehlagerung 4 befestigt, an welcher auch ein Übertragungselement 5 befestigt ist.

Die jeweilige Stellung des Handbremshebels 2 wird über dieses Übertragungselement 5 auf die nicht dargestellte Feststellbremse des Fahrzeugs übertragen. Das Übertragungselement 5 kann von einem Seil, einem Kabel oder einer Stange gebildet sein.

Der Handbremshebel 2 weist eine Führung 2a auf, auf dem vorderen Teil der Führung 2a ist ein Handgriff 6 aufgesetzt. In der Führung 2a des Handbremshebels 2 verläuft eine Betätigungsstange 7, die im vorliegenden Fall von einem stangenförmigen Kunststoffteil gebildet ist. Die Betätigungsstange 7 ist in der Führung 2a verschiebbar gelagert.

Auf dem vorderen Rand der Betätigungsstange 7, welcher über das vordere Ende der Führung 2a hervorsteht, ist ein Druckknopf 8 aufgesetzt und dort mittels Befestigungsmitteln fixiert.

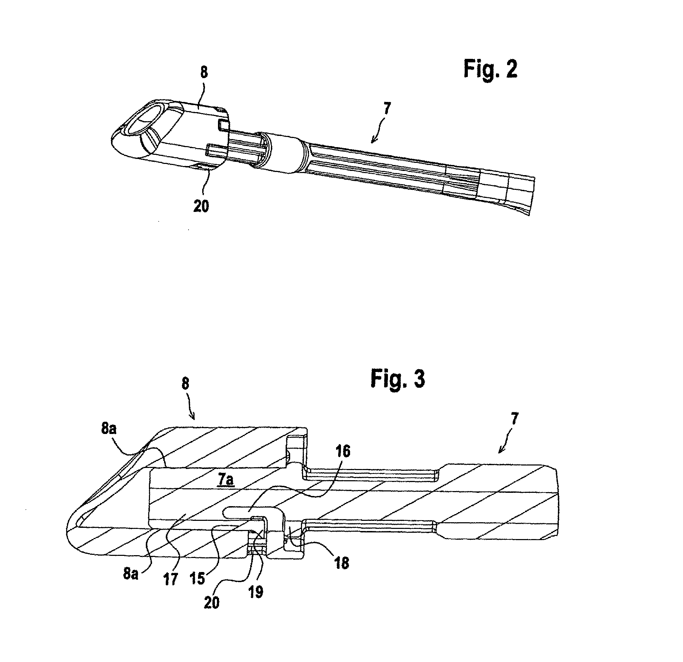

Die Betätigungsstange 7 ist mit einer Festsetzeinrichtung 9 gekoppelt. Diese ist in den Figuren 2 und 3 separat dargestellt. Mit dieser Festsetzeinrichtung 9 kann der Handbremshebel 2 in einer vorgegebenen Schwenkstellung fixiert werden.

Die Festsetzeinrichtung 9 weist im Wesentlichen eine Sperrklinke 10 und ein Sperrsegment 11 auf. Das Sperrsegment 11 ist am Lagerbock 3 befestigt und weist eine Leiste mit Rastzähnen 12 auf.

Die Sperrklinke 10 ist an einer Schwenklagerung 13 um eine horizontal verlaufende Schwenkachse schwenkbar am Handbremshebel 2 gelagert und über ein Federelement 14 vorgespannt.

Die Schwenkachse läuft durch das Zentrum der Sperrklinke 10 und unterteilt diese in zwei beidseits zur Schwenkachse verlaufende Schwenkarme. Der erste Schwenkarm der Sperrklinke 10 ist an die Betätigungsstange 7 gekoppelt. Der zweite Schwenkarm der Sperrklinke 10 steht in Eingriff mit dem Sperrsegment 11. Hierzu weist die Sperrklinke 10 am vorderen Ende des zweiten Schwenkarmes eine Rastnase auf, die an den Rastzähnen 12 des Sperrsegments 11 eingerastet werden kann. Dadurch ist der Handbremshebel 2 in einer vorgegebenen Schwenkstellung am Lagerbock 3 fixiert.

Zum Lösen der Sperrklinke 10 aus dem Sperrsegment 11 wird der Druckknopf 8 betätigt. Dadurch wird die Betätigungsstange 7 verschoben und die Sperrklinke 10 gegen die Federkraft des Federelements 14 vom Sperrsegment 11 abgelöst. Dann kann der Handbremshebel 2 gegen den Lagerbock 3 geschwenkt werden.

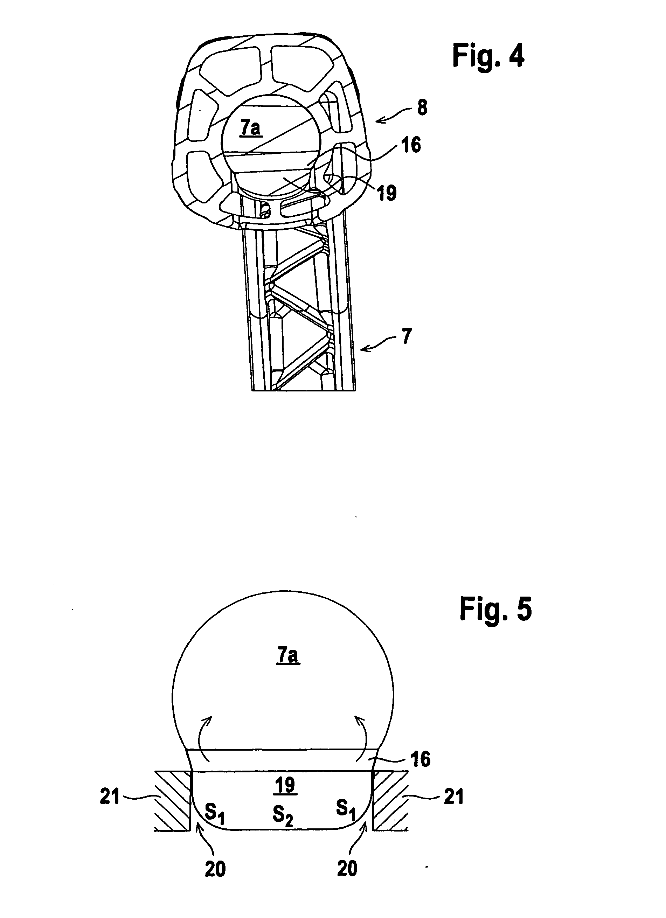

Figur 2 zeigt eine perspektivische Ansicht des vorderen Endes der Betätigungsstange 7 mit dem daran befestigten Druckknopf 8. Figur 3 zeigt einen Längsschnitt durch die Anordnung gemäß Figur 2. Schließlich zeigt Figur 4 einen Querschnitt in der in Figur 3 mit A bezeichneten Ebene der Anordnung gemäß Figur 3.

Die Figuren 3 und 4 zeigen die Bestandteile der Befestigungsmittel zur Fixierung des Druckknopfs 8 am vorderen Ende der Betätigungsstange 7. Die Betätigungsstange 7 weist einen Grundkörper 7a auf. An der Unterseite des Grundkörpers 7a mündet ein einstückig mit dem Grundkörper 7a ausgebildeter Steg 15 aus, der in Längsrichtung der Betätigungsstange 7 verläuft und durch eine Aussparung 16 vom Grundkörper 7a abgesetzt ist.

Die Dicke des Stegs 15 ist so dimensioniert, dass dieser federnde Eigenschaften aufweist.

Dabei ist ein längsseitiges Ende mit einem Vorsprung 17 des Grundkörpers 7a verbunden und mündet an diesem so aus, dass der Steg 15 entlang der Längsachse der Betätigungsstange 7 in konstantem Abstand, durch die Aussparung 16 getrennt zum anderen Rand des Grundkörpers 7a verläuft.

Das freie Ende des Stegs 15 ist durch die Aussparung 16 von einem zweiten Vorsprung 18 der Betätigungsstange 7 getrennt. Der Steg 15 ist so ausgebildet, dass dessen unterer Rand mit den unteren Rändern der angrenzenden Segmente der Betätigungsstange 7 bündig abschließt.

An dem freien Ende des Stegs 15 ist eine einstückig mit diesem ausgebildete Rastlasche 19 vorgesehen. Die Rastlasche 19 steht über den unteren Rand des Stegs 15 hervor.

Zur Fixierung des Druckknopfs 8 an der Betätigungsstange 7 wird der Druckknopf 8 mit seiner in axialer Richtung, am hinteren Ende des Druckknopfs 8 ausmündenden Bohrung, auf die Betätigungsstange 7 aufgeschoben. Dabei liegt die Mantelfläche der Betätigungsstange 7 dicht, das heißt spielfrei oder spielarm an der die Bohrung begrenzenden Innenwand 8a des Druckknopfs 8 an. Sobald der Druckknopf 8 so weit eingeschoben ist, dass auch der Steg 15 mit der Rastlasche 19 in der Bohrung liegt, wird durch das Aufsitzen der Rastlasche 19 auf der Innenwand 8a der Bohrung geringfügig nach oben in den Bereich der Aussparung 16 hinein gehoben. Sobald der Druckknopf 8 vollständig auf die Betätigungsstange 7 aufgeschoben ist, rastet die Rastlasche 19 in einen Schlitz 20 an der Unterseite des Druckknopfs 8 ein, wodurch eine Rastverbindung zwischen Druckknopf 8 und Betätigungsstange 7 hergestellt ist. Wie insbesondere aus den Figuren 2 und 3 ersichtlich, mündet der Schlitz 20 an der Unterseite des Druckknopfs 8 aus.

In den Figuren 4 und 5 ist eine Draufsicht auf die Vorderseite der im Schlitz 20 des Druckknopfs 8 gelagerten Rastlasche 19 gezeigt. Wie aus diesen Darstellungen ersichtlich, weist die Rastlasche 19 eine bogenförmige Kontur auf. Dabei weist diese Kontur, wie in Figur 5 dargestellt, in ihren Randbereichen Segmente S1 mit einer ersten Krümmung und im zentralen Segment S2 eine zweite Krümmung auf.

Die Randsegmente S1 der Rastlasche 19 sind so ausgebildet, dass diese dicht an den Wandsegmenten 21 des Druckknopfs 8, die den Schlitz 20 begrenzen, anliegen.

Durch die bogenförmige Kontur kann durch Drehen des Druckknopfs 8 bezüglich der Betätigungsstange 7 in einer der mit den Pfeilen in Figur 5 gekennzeichneten Drehrichtungen die Rastlasche 19 aus dem Schlitz 20 herausgedreht werden, wodurch die Rastverbindung zwischen Druckknopf 8 und Betätigungsstange 7 gelöst wird und damit der Druckknopf 8 von der Betätigungsstange 7 abgezogen werden kann.

Ein derartiges Ablösen des Druckknopfs 8 von der Betätigungsstange 7 ist dann unterbunden, wenn auf die Führung 2a des Handbremshebels 2 der Handgriff 6 aufgesetzt und an diesem vorzugsweise verrastet wird. Dies beruht darauf, dass, wie aus Figur 1 ersichtlich, der aufgesetzte Handgriff 6 den Druckknopf 8 an seiner Mantelfläche teilweise umschließt und damit drehsicher fixiert.

Die drehsichere Lagerung wird in einfacher Weise dadurch erhalten, dass der Druckknopf 8 einen, wie aus den Figuren 2 und 4 ersichtlich, nicht rotationssymmetrischen Querschnitt aufweist. Einen entsprechenden Querschnitt weist eine den Handgriff 6 in axialer Richtung durchsetzende Bohrung auf. Liegt die die Bohrung begrenzende Innenwand 8a des Handgriffs 6 dicht an der Mantelfläche des Druckknopfs 8 an, so ist der Druckknopf 8 damit drehsicher gelagert und die Rastverbindung zwischen Druckknopf 8 und Betätigungsstange 7 kann nicht mehr gelöst werden. Ein Lösen der Rastverbindung ist erst dann wieder möglich, wenn der Handgriff 6 von der Führung 2a des Handbremshebels 2 abgenommen wird.

### Bezugszeichenliste

- (1): Betätigungsvorrichtung
- (2): Handbremshebel
- (2a): Führung
- (3): Lagerbock
- (4): Drehlagerung
- (5): Übertragungselement
- (6): Handgriff
- (7): Betätigungsstange
- (7a): Grundkörper
- (8): Druckknopf
- (8a): Innenwand
- (9): Festsetzeinrichtung
- (10): Sperrklinke
- (10b): Langloch
- (11): Sperrsegment
- (12): Rastzahn
- (13): Schwenklagerung
- (14): Federelement
- (15): Steg
- (16): Aussparung
- (17): Vorsprung
- (18): Vorsprung
- (19): Rastlasche
- (20): Schlitz
- (21): Wandsegment

## Patentansprüche

1. Betätigungsvorrichtung (1) für eine Feststellbremse mit einem an einem Lagerbock (3) schwenkbar gelagerten Handbremshebel (2), welcher mittels einer Festsetzeinrichtung (9) in einer vorgegebenen Schwenkstellung fixierbar ist, und mit einer im Handbremshebel (2) geführten und in Wirkverbindung mit der Festsetzeinrichtung (9) stehenden Betätigungsstange (7), welche im Handbremshebel (2) verschiebbar gelagert ist, und an deren einem längsseitigen Ende ein Druckknopf (8) mittels Befestigungsmitteln befestigt ist, so dass mit dem Druckknopf (8) die Betätigungsstange (7) betätigbar ist, **dadurch gekennzeichnet, dass** die Befestigungsmittel Rastmittel und eine Drehlagerung (4) bilden, so dass der Druckknopf (8) auf die Betätigungsstange (7) aufrastbar ist und die Rastverbindung durch Drehen des Druckknopfs (8) bezüglich der Betätigungsstange (7) lösbar ist.

2. Betätigungsvorrichtung nach Anspruch 1, **dadurch gekennzeichnet, dass** die Betätigungsstange (7) in einer Führung (2a) des Handbremshebels (2) geführt ist, auf welche ein Handgriff (6) aufsetzbar ist, wobei bei auf der Führung (2a) aufgesetztem Handgriff (6) die Drehung des Druckknopfs (8) relativ zur Betätigungsstange (7) blockiert ist.

3. Betätigungsvorrichtung nach Anspruch 2, **dadurch gekennzeichnet, dass** der Druckknopf (8) gegen eine Drehung relativ zur Betätigungsstange (7) **dadurch** gesichert ist, dass ein nicht rotationssymmetrisches Segment der Mantelfläche des Druckknopfs (8) von dem Handgriff (6) umschlossen ist.

4. Betätigungsvorrichtung nach Anspruch 3, **dadurch gekennzeichnet, dass** der Handgriff (6) von einer Bohrung in axialer Richtung durchsetzt ist, wobei bei auf dem Handbremshebel (2) aufsitzendem Handgriff (6) ein Segment der die Bohrung begrenzenden Innenwand (8a) des Handgriffs (6) an der Mantelfläche des Druckknopfs (8) anliegt.

5. Betätigungsvorrichtung nach einem der Ansprüche 1 bis 4, **dadurch gekennzeichnet, dass** an dem längsseitigen Ende der Betätigungsstange (7) ein von dessen Grundkörper (7a) durch eine Aussparung (16) abgesetzter Steg (15) vorgesehen ist, der in Längsrichtung der Betätigungsstange (7) verläuft, dessen erstes längsseitiges Ende mit dem Grundkörper (7a) verbunden ist und an dessen zweitem, freiliegenden Ende eine Rastlasche (19) vorgesehen ist, welche zur Herstellung einer Rastverbindung zwischen Druckknopf (8) und Betätigungsstange (7) in einen Schlitz (20) des Druckknopfs (8) einrastbar ist.

6. Betätigungsvorrichtung nach Anspruch 5, **dadurch gekennzeichnet, dass** die Rastlasche (19) senkrecht über den Steg (15) hervorsteht.

7. Betätigungsvorrichtung nach einem der Ansprüche 5 oder 6, **dadurch gekennzeichnet, dass** die Rastlasche (19) eine bogenförmige Außenkontur aufweist.

8. Betätigungsvorrichtung nach Anspruch 7, **dadurch gekennzeichnet, dass** die Außenkontur der Rastlasche (19) zwei unterschiedliche Krümmungsradien aufweist.

9. Betätigungsvorrichtung nach Anspruch 8, **dadurch gekennzeichnet, dass** die Rastlasche (19) in den an den Steg (15) angrenzenden Randbereichen eine andere Krümmung aufweist als in dessen Zentrum.

10. Betätigungsvorrichtung nach einem der Ansprüche 5 bis 9, **dadurch gekennzeichnet, dass** die Breite der Rastlasche (19) an die Breite des Schlitzes (20) angepasst ist.

11. Betätigungsvorrichtung nach einem der Ansprüche 5 bis 10, **dadurch gekennzeichnet, dass** der Steg (15) federnde Eigenschaften aufweist.

12. Betätigungsvorrichtung nach einem der Ansprüche 5 bis 11, **dadurch gekennzeichnet, dass** bei Drehen des Druckknopfs (8) relativ zur Betätigungsstange (7) die Außenkontur der Rastlasche (19) entlang des Randes des Schlitzes (20) des Druckknopfs (8) gleitet.

## Claims

1. Actuating device (1) for a parking brake with a handbrake lever (2), which is pivotably mounted on a bearing block (3) and which is fixable in a predetermined pivot setting by means of a fixing device (9), and with an actuating rod (7), which is guided and displaceably mounted in the handbrake lever (2) and disposed in operative connection with the fixing device (9) and at one longitudinal end of which a press button (8) is fastened by way of fastening means so that the actuating rod (7) is actuable by the press button (8), **characterised in that** the fastening means forms detent means and a rotary mount (4) so that the press button (8) is detentable on the actuating rod (7) and the detent connection is releasable by rotation of the press button (8) with respect to the actuating rod (7).

2. Actuating device according to claim 1, **characterised in that** the actuating rod is guided in a guide (2a) of the handbrake lever (2) on which a handle (6) can be placed, wherein when the handle (6) is placed on the guide (2a) the rotation of the press button (8) relative to the actuating rod (7) is blocked.

3. Actuating device according to claim 2, **characterised in that** the press button (8) is so secured against rotation relative to the actuating rod (7) that a non-rotationally-symmetrical segment of the circumferential surface of the press button (8) is enclosed by the handle (6).

4. Actuating device according to claim 3, **characterised in that** the handle (6) is penetrated by a bore in axial direction, wherein when the handle (6) is placed on the handbrake lever (2) a segment of the inner wall (8a), which bounds the bore, of the handle (6) rests on the circumferential surface of the press button (8).

5. Actuating device according to any one of claims 1 to 4, **characterised in that** provided at the longitudinal end of the actuating rod (7) is a web (15) which is offset from the base body (7a) thereof by a cut-out (16) and which extends in the longitudinal direction of the actuating rod (7), a first longitudinal end of the web being connected with the base body (7a) and a detent strap (19) being provided at the second, free end of the web, the strap being detentable in a slot (20) of the press button (8) in order to produce a detent connection between press button (8) and actuating rod (7).

6. Actuating device according to claim 5, **characterised in that** the detent strap (19) protrudes perpendicularly beyond the web (15).

7. Actuating device according to one of claims 5 and 6, **characterised in that** the detent strap (19) has a curved outer contour.

8. Actuating device according to claim 7, **characterised in that** the outer contour of the detent strap (19) has two different radii of curvature.

9. Actuating device according to claim 8, **characterised in that** the detent strap (19) has in the edge regions adjoining the web (15) a curvature different from that in the centre thereof.

10. Actuating device according to any one of claims 5 to 9, **characterised in that** the width of the detent strap (19) is matched to the width of the slot (20).

11. Actuating device according to any one of claims 5 to 10, **characterised in that** the web (15) has resilient characteristics.

12. Actuating device according to any one of claims 5 to 11, **characterised in that** on rotation of the press button (8) relative to the actuating rod (7) the outer contour of the detent strap (19) slides along the edge of the slot (20) of the press button (8).

## Revendications

1. Dispositif d'actionnement (1) pour un frein de stationnement, avec un levier de frein à main (2) qui est monté à pivotement sur un palier support (3) et qui peut être fixé dans une position de pivotement prédéfinie au moyen d'un dispositif d'immobilisation (9), et avec une tige d'actionnement (7) guidée dans le levier de frein à main (2) et fonctionnellement reliée au dispositif d'immobilisation (9), tige qui est montée à translation dans le levier de frein à main (2) et à l'une des extrémités longitudinales de laquelle un bouton poussoir (8) est fixé à l'aide de moyens de fixation, de sorte que la tige d'actionnement (7) peut être actionnée avec le bouton poussoir (8), **caractérisé en ce que** les moyens de fixation forment des moyens d'encliquetage et un palier rotatif (4), de sorte que le bouton poussoir (8) peut être encliqueté sur la tige d'actionnement (7) et que la liaison par encliquetage peut être libérée en faisant tourner le bouton poussoir (8) par rapport à la tige d'actionnement (7).

2. Dispositif d'actionnement selon la revendication 1, **caractérisé en ce que** la tige d'actionnement (7) est guidée dans un guide (2a) du levier de frein à main (2), guide sur lequel peut être montée une poignée (6), sachant que lorsque la poignée (6) est montée sur le guide (2a), la rotation du bouton poussoir (8) par rapport à la tige d'actionnement (7) est bloquée.

3. Dispositif d'actionnement selon la revendication 2, **caractérisé en ce que** la rotation du bouton poussoir (8) par rapport à la tige d'actionnement (7) est empêchée par le fait qu'un segment de la surface d'enveloppe du bouton poussoir (8) qui n'est pas à symétrie de révolution est enserré par la poignée (6).

4. Dispositif d'actionnement selon la revendication 3, **caractérisé en ce que** la poignée (6) est traversée par un perçage en direction axiale, sachant que lorsque la poignée (6) est montée sur le levier de frein à main (2), un segment de la paroi intérieure (8a) de la poignée (6) qui délimite le perçage s'applique contre la surface d'enveloppe du bouton poussoir (8).

5. Dispositif d'actionnement selon l'une des revendications 1 à 4, **caractérisé en ce qu'**une branche (15) est prévue à l'extrémité longitudinale de la tige d'actionnement (7), branche qui est en déport par rapport au corps de base (7a) de ladite tige au moyen d'un évidement (16), qui s'étend dans la direction longitudinale de la tige d'actionnement (7), dont la première extrémité longitudinale est reliée au corps de base (7a), et à la deuxième extrémité, libre, de laquelle est prévue une patte d'encliquetage (19) qui, afin de réaliser une liaison par encliquetage entre le bouton poussoir (8) et la tige d'actionnement (7), peut être encliquetée dans une fente (20) du bouton poussoir (8).

6. Dispositif d'actionnement selon la revendication 5, **caractérisé en ce que** la patte d'encliquetage (19) dépasse verticalement de la branche (15).

7. Dispositif d'actionnement selon la revendication 5 ou 6, **caractérisé en ce que** la patte d'encliquetage (19) présente un contour extérieur incurvé.

8. Dispositif d'actionnement selon la revendication 7, **caractérisé en ce que** le contour extérieur de la patte d'encliquetage (19) présente deux rayons de courbure différents.

9. Dispositif d'actionnement selon la revendication 8, **caractérisé en ce que** la patte d'encliquetage (19) présente une courbure différente dans les régions de bords voisines de la branche (15) que dans son centre.

10. Dispositif d'actionnement selon l'une des revendications 5 à 9, **caractérisé en ce que** la largeur de la patte d'encliquetage (19) est adaptée à la largeur de la fente (20).

11. Dispositif d'actionnement selon l'une des revendications 5 à 10, **caractérisé en ce que** la branche (15) présente des propriétés élastiques.

12. Dispositif d'actionnement selon l'une des revendications 5 à 11, **caractérisé en ce que**, lors de la rotation du bouton poussoir (8) par rapport à la tige d'actionnement (7), le contour extérieur de la patte d'encliquetage (19) glisse le long du bord de la fente (20) du bouton poussoir (8).
